(19) Europäisches Patentamt
European Patent Office
Office européen des brevets

(11) EP 4 607 784 A1

(12) EUROPÄISCHE PATENTANMELDUNG

(43) Veröffentlichungstag:
27.08.2025 Patentblatt 2025/35

(21) Anmeldenummer: 24158898.7

(22) Anmeldetag: 21.02.2024

(51) Internationale Patentklassifikation (IPC):
H02M 7/483 (2007.01)   H02M 1/32 (2007.01)
H02M 1/34 (2007.01)   H02P 3/22 (2006.01)

(52) Gemeinsame Patentklassifikation (CPC):
H02M 1/322; H02M 1/325; H02M 1/348;
H02M 7/4835; H02P 3/22; H02M 1/0095;
H02M 7/7575

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Innomotics GmbH
90441 Nürnberg (DE)

(72) Erfinder: Gaudenz, Markus Matthias
91056 Erlangen (DE)

(74) Vertreter: Siemens Patent Attorneys
Postfach 22 16 34
80506 München (DE)

(54) AUFBAU UND BETRIEBSVERFAHREN FÜR EINEN MODULAREN BREMSSTELLER

(57) Die Erfindung betrifft einen modularer Bremssteller (1) mit Submodulen (2). Zur Verbesserung des modularen Bremsstellers (1) wird vorgeschlagen, dass zwischen zwei Anschlüssen (13) des modularen Bremsstellers (1) eine erste Submodulgruppe (21), eine zweite Submodulgruppe (22) und ein Bremswiderstand (3) in einer ersten Reihenschaltung (14) angeordnet sind, wobei der Bremswiderstand (3) elektrisch zwischen der ersten Submodulgruppe (21) und der zweiten Submodulgruppe (22) angeordnet ist, wobei die erste Submodulgruppe (21) und die zweite Submodulgruppe (22) jeweils mindestens ein Submodul (2), einen weiteren Bremswiderstand (31) und einen Kondensator (7) aufweisen, wobei elektrisch parallel zu mindestens einem Submodul (2) des mindestens einen Submoduls (2) eine zweiten Reihenschaltung (15) aus dem weiteren Bremswiderstand (31) und dem Kondensator (7) angeordnet ist. Ferner betrifft die Erfindung eine modulare Antriebseinheit (10), aufweisend einen modularen Multilevel-Stromrichter (11) und einen derartigen modularen Bremssteller (1), wobei der Multilevel-Stromrichter (11) gleichspannungsseitig mit dem modularen Bremssteller (1) verbunden ist. Die Erfindung betrifft weiter ein Betriebsverfahren für einen derartigen modularen Bremssteller (1) oder für eine derartige modulare Antriebseinheit (10), wobei durch die Submodule (2) der ersten Submodulgruppe (21) ein erster Wechselspannungsanteil ($u_{BR,AC,1}$) und durch die Submodule (2) der zweiten Submodulgruppe (22) ein zweiter Wechselspannungsanteil ($u_{BR,AC,2}$) erzeugt wird, wobei der erste Wechselspannungsanteil ($u_{BR,AC,1}$) und der zweiter Wechselspannungsanteil ($u_{BR,AC,2}$) gegenphasig zueinander sind.

FIG 1

EP 4 607 784 A1

**Beschreibung**

Die Erfindung betrifft einen modularen Bremssteller, wobei zwischen zwei Anschlüssen des modularen Bremsstellers eine erste Submodulgruppe und ein Bremswiderstand in einer Reihenschaltung angeordnet sind, wobei die erste Submodulgruppe mindestens ein Submodul aufweist. Die Erfindung betrifft weiter eine modulare Antriebseinheit, aufweisend einen modularen Multilevel-Stromrichter und einen derartigen modularen Bremssteller. Die Erfindung betrifft weiter ein Betriebsverfahren für einen derartigen modularen Bremssteller oder für eine derartige modulare Antriebseinheit.

Der modulare Multilevel-Stromrichter ist aus der DE 10 103 031 A1 bekannt. Dieser, auch als M2C oder MMC bekannte Stromrichter, besitzt eine Konverter-Topologie, die aufgrund des Aufbaus mit Submodulen insbesondere für Mittel- und Hochspannungsanwendungen geeignet ist. Der Grundaufbau des mehrphasigen Konverters umfasst zwei Konverterarme pro Phase, die jeweils eine Reihenschaltung von Submodulen aufweisen. Dabei sind die beiden Konverterarme am Phasenanschluss miteinander verbunden. Die andere Seite der Konverterarme ist mit der Gleichspannungsseite des Multilevel-Stromrichters verbunden. Die Wechselspannungsseite des modularen Multilevel-Stromrichters wird durch einen oder mehrere Phasenanschlüsse gebildet. Im grundlegenden Aufbau kann mit dem modularen Multilevel-Stromrichter Energie zwischen der Gleichspannungsseite und der Wechselspannungsseite bidirektional übertragen oder in einem gewissen Maß zwischengespeichert werden.

Um zusätzlich einen gezielten Energieabbau zu ermöglichen, ist die Installation eines Bremsstellers zweckmäßig. Ein modularer Bremssteller ist aus der WO 2007/023061 A2 bekannt. Der modulare Bremssteller wird üblicherweise an die Gleichspannungsseite des modularen Multilevel-Stromrichters, beispielsweise zwischen einem DC+ und einem DC- Anschluss, angeschlossen.

Der Widerstand einer Bremsstelleranordnung wird oftmals auch als Bremswiderstand bezeichnet, da dieser dazu geeignet ist, elektrische Energie einer elektrischen Maschine, die aufgrund eines Bremsvorgangs erzeugt wird, in Wärme umzuwandeln. Dabei ist die Verwendung eines Bremsstellers nicht auf die Anwendung eines bremsenden, elektrischen Antriebs beschränkt. So muss es sich nicht notwendigerweise um Bremsenergie handeln, die in Wärme umgewandelt wird. Der Bremssteller kann beispielsweise auch zur Stabilisierung eines Energieversorgungsnetzes eingesetzt werden, indem er elektrische Energie aus dem Energieversorgungsnetz in Wärme umwandelt. Der Begriff Bremswiderstand wurde gewählt, um den Widerstand, in dem eine vorgegebene elektrische Energie bzw. Leistung in Wärme bzw. Wärme pro Zeit umgesetzt wird, von anderen Widerständen unterscheiden zu können.

Mit der Bezeichnung, eine in Wärme umzusetzende Leistung ist im Folgenden gemeint, dass das Integral der Leistung über die Zeit in Wärme umgesetzt wird. Mit anderen Worten wird eine sich aus der Leistung über die Zeit ergebende Energiemenge in Wärme umgesetzt.

Eine Reihenschaltung wird definiert als eine Schaltung von Bauelementen, die vom gleichen Strom durchflossen werden. Die Reihenschaltung von Teilimpedanzen wirkt wie ein einziger Zweipol mit einer Impedanz, die der Summe der Teilimpedanzen entspricht.

Der Erfindung liegt die Aufgabe zugrunde, einen modularen Bremssteller zu verbessern.

Diese Aufgabe wird durch einen modularen Bremssteller gelöst, wobei zwischen zwei Anschlüssen des modularen Bremsstellers eine erste Submodulgruppe, eine zweite Submodulgruppe und ein Bremswiderstand in einer ersten Reihenschaltung angeordnet sind, wobei der Bremswiderstand elektrisch zwischen der ersten Submodulgruppe und der zweiten Submodulgruppe angeordnet ist, wobei die erste Submodulgruppe und die zweite Submodulgruppe jeweils mindestens ein Submodul, einen weiteren Bremswiderstand und einen Kondensator aufweisen, wobei elektrisch parallel zu mindestens einem Submodul des mindestens einen Submoduls eine zweiten Reihenschaltung aus dem weiteren Bremswiderstand und dem Kondensator angeordnet ist. Ferner wird diese Aufgabe durch eine modulare Antriebseinheit gelöst, wobei diese einen modularen Multilevel-Stromrichter und einen derartigen modularen Bremssteller aufweist, wobei der Multilevel-Stromrichter gleichspannungsseitig mit dem modularen Bremssteller verbunden ist. Diese Aufgabe wird weiter durch ein Betriebsverfahren für einen derartigen modularen Bremssteller oder für eine derartige modulare Antriebseinheit gelöst, wobei durch die Submodule der ersten Submodulgruppe ein erster Wechselspannungsanteil und durch die Submodule der zweiten Submodulgruppe ein zweiter Wechselspannungsanteil erzeugt wird, wobei der erste Wechselspannungsanteil und der zweiter Wechselspannungsanteil gegenphasig zueinander sind.

Weitere vorteilhafte Ausgestaltungen der Erfindung sind in den abhängigen Ansprüchen angegeben.

Der Erfindung liegt unter anderem die Erkenntnis zugrunde, dass sich das Energiegleichgewicht in den Submodulen und damit die Stabilität des modularen Bremsstellers auf besonders einfache Weise erreichen lässt. Der wesentliche Aufbau umfasst dazu die erste Submodulgruppe, die zweite Submodulgruppe und den Bremswiderstand-Die Submodulgruppen weisen jeweils mindestens ein Submodul auf. Zur Erweiterung des Betriebsbereichs in Bezug auf die Betriebsspannung des Bremsstellers, die bei der Verwendung mit einem Stromrichter der Zwischenkreisspannung des Stromrichters entspricht, kann die jeweilige Submodulgruppe eine Vielzahl von Submodulen, gemeint sind mindestens zwei Submodule, aufweisen. Parallel zu dem Submodul oder zu mindestens einem der Submodule ist ein paralleler Strompfad angeordnet. In vorteilhafter Weise ist der parallele Strompfad parallel zu der Reihenschaltung aller Submodule der jeweiligen Submodulgruppe angeordnet. Der parallele Strompfad ist derart ausgebildet, dass er einen weiteren Bremswiderstand aufweist und die Ausbildung eines Gleichstroms im parallelen Strompfad unterdrücken kann. Zur Unterdrückung des Gleichstroms kommt in vorteilhafter Weise ein Kondensator zum Einsatz.

Mit Hilfe einer über den beiden Submodulgruppen in Summe anliegenden Gleichspannung $U_{SM,DC,1/2}$ kann eine Gleichspannung $U_R$ über dem Bremswiderstand $R_1$ erzeugt werden, die einen Gleichstrom $i_{DC}$ durch den modularen Bremssteller erzeugt. Damit gilt

$$U_{SM,DC,1/2} = U_D - U_R.$$

In vorteilhafter Weise kann sich die Gleichspannung $U_{SM,DC,1/2}$ über beide Submodulgruppen zu gleichen Teilen aufteilen, dann ergibt sich als Gleichspannung $U_{SM,DC,1}$, $U_{SM,DC,2}$ über den jeweiligen Submodulgruppen zu

$$U_{SM,DC,1} = U_{SM,DC,2} = \frac{1}{2}U_{SM,DC,1/2} = \frac{1}{2}(U_D - U_R).$$

Dabei entspricht der Gleichstrom $i_{DC}$ durch den modularen Bremssteller dem Wert, der multipliziert mit der Zwischenkreisspannung bzw. der Spannung an den Anschlüssen des modularen Bremsstellers, der in Wärme umzuwandelnden Leistung entspricht. Der Gleichstrom $i_{DC}$ ergibt sich zu

$$i_{DC} = \frac{U_R}{R_1}$$

Somit kann der modulare Bremssteller derart gesteuert oder geregelt werden, dass abhängig von einer in Wärme umzusetzenden Leistung ein Gleichstrom $i_{DC}$ durch den modularen Bremssteller erzeugt wird. Durch diesen Gleichstrom $i_{DC}$ nimmt der modulare Bremssteller die Leistung

$$P_{BS} = U_D \cdot i_{DC}.$$

auf. Dabei wird im Bremswiderstand $R_1$ die Leistung

$$P_{R1} = i_{DC}^2 \cdot R_1 = \frac{U_R^2}{R_1}$$

in Wärme umgesetzt. Um das Energiegleichgewicht herzustellen, muss die Differenz zwischen der vom Bremssteller aufgenommenen Leistung $P_{BS}$ und der im Bremswiderstand in Wärme umgesetzten Leistung $P_{R1}$ in den weiteren Widerständen umgesetzt werden. Damit ist dann gewährleistet, dass die Kondensatoren der Submodulen, zur besseren Unterscheidung auch als Submodulkondensatoren bezeichnet, im zeitlichen Mittel ihre Ladung erhalten und sich nicht unzulässig auf- oder entladen. Mit anderen Worten wird durch das Energiegleichgewicht ein stabiler Arbeitspunkt des modularen Bremsstellers sichergestellt. Die in den beiden weiteren Widerständen umzusetzenden Leistung $P_{R2a/b}$ beträgt damit

$$P_{R2a/b} = P_{BS} - P_{R1} = U_D \cdot i_{DC} - i_{DC}^2 \cdot R_1$$

Diese kann sich beispielsweise zu gleichen Anteilen auf die beiden weiteren Widerstände $R_{2a}$, $R_{2b}$ verteilen. Dabei wird die Leistung in den weiteren Widerständen durch eine Wechselspannung über den Submodulgruppen erzeugt. Da die Wechselspannung ein Teil der Spannung über den Submodulgruppen ist, wird diese auch als Wechselspannungsanteil bezeichnet. Gleiches gilt für die Gleichspannung über den Submodulgruppen, die auch als Gleichspannungsanteil bezeichnet wird. In vorteilhafter Weise beträgt der Phasenunterschied zwischen der Wechselspannung der ersten Submodulgruppe und der Wechselspannung der zweiten Submodulgruppe 180°. Anders ausgedrückt, sind die Wechselspannung der ersten Submodulgruppe und die Wechselspannung der zweiten Submodulgruppe gegenphasig zueinander. Dadurch wird erreicht, dass kein Wechselstrom an den Anschlüssen des modularen Bremsstellers auftritt. An den Bremssteller tritt somit nur der Gleichstrom $i_{DC}$ auf, der keine Spannungsschwankungen im Zwischenkreis verursacht. Dadurch kann der modulare Bremssteller ohne Belastung des Zwischenkreises mit Oberschwingungen betrieben werden.

Werden die weiteren Widerstände mit gleichem Widerstandswert gewählt, so ergibt sich für die in den weiteren Widerständen umgesetzte Leistung

$$P_{R2a/b} = P_{R2a} + P_{R2b} = 2 \cdot R_2 \cdot i_{R2,eff}^2$$

Je größer die Frequenz des Wechselanteils, desto größer ist aufgrund des Kondensators der zweiten Reihenschaltung der Wechselstrom durch die Widerstände $R_2$. Der Strom $i_{R2}$ und damit die Leistung $P_{R2}$ kann daher in vorteilhafter Weise mittels der Frequenz und/oder zusätzlich mit der Amplitude des Wechselspannungsanteils geregelt werden. Diese Regelung kann beispielsweise in Abhängigkeit von der Höhe der Kondensatorspannungen der Submodule durchgeführt werden. Im Falle des Energiegleichgewichts verändert sich die Zwischenkreisspannung im Mittel nicht. Also kann beispielsweise bei wachsender Kondensatorspannungen die Frequenz und/oder die Amplitude des Wechselspannungsanteils erhöht und bei sinkenden Kondensatorspannungen die Frequenz und/oder die Amplitude des Wechselspannungsanteils reduziert werden. Damit lässt sich ein stabiler Arbeitspunkt beispielsweise mittels eines PI-Reglers realisieren. Dadurch wird sichergestellt, dass die durch den Gleichstrom von den Submodulen aufgenommene Energie der jeweiligen Submodulgruppe über den weiteren Widerstand in Wärme umgewandelt wird, so dass im zeitlichen Mittel (abzüglich der elektrischen Verluste im Submodul) keine Energie von den Submodulen aufgenommen wird.

Bei dem Wechselspannungsanteil kann es sich um ein beliebiges Wechselsignal wie beispielsweise ein Sinussignal, Rechtecksignal, Dreiecksignal, Trapezsignal, etc. handeln.

Für einen Sinus Verlauf des Wechselanteils mit einer Amplitude von $\hat{u}_{SM,AC}$ ergibt sich für den Strom die Amplitude

$$\hat{\imath}_{R2} = \frac{\hat{u}_{SM,AC}}{\sqrt{R_2^2 + \frac{1}{(\omega C)^2}}}$$

und damit die Wirkleistung

$$P_{R2} = 2 \cdot R_2 \cdot \frac{1}{2} \frac{\hat{u}_{SM,AC}^2}{R_2^2 + \frac{1}{(\omega C)^2}} = R_2 \cdot \frac{\hat{u}_{SM,AC}^2}{R_2^2 + \frac{1}{(\omega C)^2}}.$$

Anhand der Formel wird deutlich, dass sich die in den weiteren Widerständen umgesetzten Leistung durch die Amplitude der Wechselspannung und/oder auch durch die Frequenz des Wechselspannungsanteils steuern oder regeln lässt.

Somit weist die Spannung über den Submodulgruppen jeweils einen Gleichspannungsanteil auf, dessen Gleichspannung den Gleichstrom durch den modularen Bremssteller und den Bremswiderstand bewirkt. Darüber hinaus weist die Spannung über den Submodulgruppen jeweils einen Wechselspannungsanteil auf, dessen Wechselspannung über den Submodulgruppen einen Wechselstrom durch die weiteren Widerstände in dem parallelen Strompfad der zweiten Reihenschaltung bewirkt. Durch den Kondensator in Reihe zu dem weiteren Bremswiderstand wird eine Auswirkung der Gleichspannung auf den Strom durch den weiteren Bremswiderstand vermieden. Der Strom durch den weiteren Bremswiderstand ist somit durch die Wechselspannung, unabhängig von dem Gleichstrom und der Leistungsaufnahme des modularen Bremsstellers steuerbar. Gleichzeitig wird durch die Gegenphasigkeit der Wechselspannung von erster und zweiter Submodulgruppe die Ausbildung eines Wechselstroms durch den Bremswiderstand und an den Anschlüssen des modularen Bremsstellers zuverlässig verhindert. Dadurch sind die einzelnen Größen getrennt voneinander regelbar. Damit lassen sich die Leistungen durch die einzelnen Widerstände unabhängig voneinander steuern und regeln, so dass sowohl die vom Bremssteller in Wärme umzuwandelnde Leistung geregelt werden kann als auch der Betriebspunkt stabil eingestellt werden kann. Dies führt zu einer einfachen Regelungs- oder Steuerstruktur des modularen Bremsstellers, mit der der modulare Bremssteller stabil betrieben werden kann. Mit Hilfe des Gleichstromanteils wird die durch den Bremssteller aufgenommene Leistung gesteuert oder geregelt. Mit Hilfe des Wechselspannungsanteils wird die Energiebilanz ausgeglichen, so dass der modulare Bremssteller stabil betrieben werden kann.

Bei einer vorteilhaften Ausgestaltung der Erfindung weisen die erste Submodulgruppe und die zweite Submodulgruppe jeweils eine Vielzahl von Submodulen auf, wobei die Submodule elektrisch in Reihe angeordnet sind. Es hat sich gezeigt, dass auch die Anordnung von einer Vielzahl von Submodulen in der jeweiligen Submodulgruppe möglich ist. Dabei erzeugt dann nicht nur ein Submodul eine entsprechende Spannung mit Gleichspannungsanteil und Wechselspannungsanteil über der jeweiligen Submodulgruppe, sondern eine Vielzahl von Submodulen. Mit einer Vielzahl von Submodulen sind mindestens zwei Submodule gemeint, die elektrisch in Reihe angeordnet sind. Durch die elektrische Anordnung in Reihe addieren sich die Spannungen der einzelnen Submodule. Diese müssen nicht notwendigerweise vom gleichen Strom durchflossen sein. Beispielsweise können diese von unterschiedlichen Strömen durchflossen sein, falls nur ein Teil der Submodule parallel zu der zweiten Reihenschaltung aus Kondensator und weiterem Bremswiderstand angeordnet sind oder die Submodulgruppe mehrere zweite Reihenschaltungen aufweist.

Durch die Verwendung einer Vielzahl von Submodulen ergibt sich die Möglichkeit, den modularen Bremssteller an beliebige Spannungslevel anzupassen. Somit ist auch gerade die Verwendung dieses modularen Bremsstellers für Anwendungen in der Mittelspannung und/oder Hochspannung besonders vorteilhaft. Darüber hinaus ist es durch die Verwendung einer Vielzahl von Submodulen auch möglich, neben der Betriebsspannung auch die Leistung des modularen Bremsstellers beliebig zu erhöhen.

Da durch die Submodulgruppen zur Unterdrückung eines Wechselstroms an den Anschlüssen des modularen Bremsstellers vorzugsweise der gleiche Wert der Gleichspannung und der gleiche Wert der Wechselspannungsamplitude erzeugt werden, hat es sich als vorteilhaft erwiesen, dass die Anzahl der Submodule der ersten Submodulgruppe gleich der Anzahl der Submodule der zweiten Submodulgruppe ist. Mit anderen Worten weist die erste Submodulgruppe die gleiche Anzahl an Submodulen auf wie die zweite Submodulgruppe. Damit lässt sich eine gute und hohe Auslastung der Submodule der jeweiligen Submodulgruppen erreichen und sicherstellen. Durch die identische Anzahl an Submodulen in der ersten Submodulgruppe und der zweiten Submodulgruppe lassen sich auf einfache Weise sowohl die gleichen Gleichspannungen als auch die um 180° zueinander verschobenen Wechselspannungen erzeugen.

Die Anzahl der Submodule des Bremsstellers richtet sich nach der Betriebsspannung des modularen Bremsstellers, die der Zwischenkreisspannung des Stromrichters entspricht, mit dem der modulare Bremssteller gleichspannungsseitig verbunden ist. Insgesamt werden nur derart viele Submodule benötigt, um in Summe die Zwischenkreisspannung aufbringen zu können. Diese Anzahl von Submodulen kann dann beliebig auf die beiden Submodulgruppen verteilt werden. Wie oben beschrieben ist eine gleichmäßige Aufteilung der Submodule auf die beiden Submodulgruppen im Hinblick auf die Ausnutzung der Submodule bei Verhinderung der Ausbildung eines Wechselastroms an den Anschlüssen des modularen Bremsstellers vorteilhaft. Somit benötigt die Aufteilung der Submodule auf zwei Submodulbaugruppen nicht mehr Submodule als ein aus dem Stand der Technik bekannter aus Submodulen aufgebauter Bremssteller.

Bei einer weiteren vorteilhaften Ausgestaltung der Erfindung ist die zweite Reihenschaltung elektrisch parallel zu einem Teil der Submodule der jeweiligen Submodulgruppe angeordnet. Für geringe Werte des weiteren Bremswiderstands, insbesondere für Widerstandswerte die kleiner sind als der Bremswiderstand, werden nur geringere Amplituden für den Wechselspannungsanteil benötigt, die sich auch mit einer relativ geringen Anzahl an Submodulen erzeugen lassen. Somit müssen nicht alle Submodule der Submodulgruppe parallel zu der zweiten Reihenschaltung angeordnet sein. Dies reduziert die Belastung insbesondere von dem Kondensator der zweiten Reihenschaltung durch den Gleichspannungsanteil, der über diesem Kondensator abfällt und nach dem dieser Kondensator ausgelegt werden muss. Dadurch, dass nur ein Teil der Submodule der jeweiligen Submodulgruppe parallel zu der zweiten Reihenschaltung angeordnet ist, reduzieren sich die Anforderungen an den Kondensator ohne, dass sich Nachteile für die Regelung ergeben. Der modulare Bremssteller wird damit kostengünstiger realisierbar.

Bei einer weiteren vorteilhaften Ausgestaltung der Erfindung ist die zweite Reihenschaltung elektrisch parallel zu allen Submodulen der jeweiligen Submodulgruppe angeordnet. Durch diese Anordnung können alle Submodule zu der Erzeugung des Wechselspannungsanteils beitragen. Somit können auch alle Submodule elektrische Energie an den weiteren Bremswiderstand übertragen. Damit kann unabhängig vom Arbeitspunkt des modularen Bremsstellers jedes Submodul aufgenommene Energie an den weiteren Widerstand übertragen. Dadurch wird auf einfache Weise die Stabilität aller Submodule innerhalb des modularen Bremsstellers sichergestellt.

Bei einer weiteren vorteilhaften Ausgestaltung der Erfindung weisen die Submodulgruppen jeweils eine Vielzahl von zweiten Reihenschaltungen auf, wobei die zweiten Reihenschaltungen jeweils parallel zu mindestens einem der Submodule angeordnet sind. Die zweiten Reihenschaltungen haben durch diese Anordnung deutlich geringere Anforderungen an den Kondensator, insbesondere an die Spannungsfestigkeit des Kondensators, und den weiteren Bremswiderstand. Durch die Anpassbarkeit an beliebige Spannungslevel eines Zwischenkreises ergeben sich erhöhte Anforderungen an die Spannungsfestigkeit insbesondere an die Spannungsfestigkeit des Kondensators, falls alle Submodule einer Submodulgruppe parallel zu der zweiten Reihenschaltung angeordnet sind. Mit zunehmender Spannung erhöht sich der Aufwand für die Kondensatoren überproportional. Um diese Anforderungen auf einfache Weise erfüllen zu können werden die einzelnen Submodule oder Gruppen von Submodulen der jeweiligen Submodulgruppen mit der parallelen Anordnung der zweiten Reihenschaltung versehen. Zudem ist damit der Strom durch die einzelnen zweiten Reihenschaltungen unabhängig voneinander steuer- oder regelbar. Dies verbessert das Redundanzverhalten bei Ausfall eines oder mehrerer Submodule oder bei Ausfall eines Kondensators einer der zweiten Reihenschaltungen. Dies erhöht die Verfügbarkeit. Da dem modularen Bremssteller oftmals mit einem Abbremsvorgang eines Antriebssystems eine sicherheitsrelevante Aufgabe zukommt, kann die Sicherheit des gesamten Antriebs durch die erhöhte Redundanz deutlich verbessert und Anforderungen an die Ausfallsicherheit erfüllt werden.

Bei einer weiteren vorteilhaften Ausgestaltung der Erfindung ist jedes Submodul parallel zu einer der zweiten Reihenschaltungen angeordnet ist. Durch diese Ausgestaltung kann die zweite Reihenschaltung in das Submodul integriert werden. Es ergeben sich damit für jeden einzelnen Widerstand der weiteren Bremswiderstände geringe Wärmeentwicklungen, da sich diese auf die Vielzahl der Submodule verteilt. Aufgrund der geringen Wärme ist es möglich, den weiteren Bremswiderstand an die Kühlung des Submoduls anzubinden.

Des Weiteren ist es möglich, bei einem Fehlerfall das gesamte Submodul mit der parallel angeordneten zweiten Reihenschaltung auf einfache Weise zu tauschen. Damit kann die Wartungsdauer kurzgehalten werden. Dies sicherten den effizienten Einsatz des entsprechenden Antriebs.

Darüber hinaus kann der Submodulkondensator für die zweite Reihenschaltung genutzt werden, indem zu dem Kondensator des Submoduls der weitere Bremswiderstand derart eingefügt wird, dass sich die zweite Reihenschaltung aus Kondensator und weiterem Bremswiderstand ergibt. Der Kondensator dient dann entsprechend der Aufgabe des Submodulkondensators zum einen als Energiespeicher für das Submodul als auch als Element, das die Ausbildung eines Gleichstroms durch den weiteren Bremswiderstand verhindert.

Bei einer weiteren vorteilhaften Ausgestaltung der Erfindung ist mindestens ein Submodul der jeweiligen Submodulgruppen als Vollbrückenmodul ausgebildet. Durch die Ausbildung mindestens eines Submoduls als Vollbrückenmoduls vergrößert sich der Stellbereich des Bremsstellers. Somit können, zumindest kurzzeitig, auch höhere Spannungen als die Zwischenkreisspannung des Stromrichters an dem Bremswiderstand angelegt werden. Dies ermöglich eine zumindest temporäre Überlastfähigkeit des modularen Bremsstellers bei dem eine Leistung größer als die Nennleistung oder Bemessungsleistung des modularen Bremsstellers in Wärme umgewandelt werden kann. Darüber hinaus ist der modulare Bremssteller am Rande seiner Leistungsfähigkeit, insbesondere bei maximaler Leistung, besser steuer- und regelbar, da sich eine Stellreserve ergibt, auch wenn über den Submodulgruppen durch die Submodule eine Spannung von null, d.h. es liegt über dem Bremswiderstand die Spannung des Zwischenkreises an, erzeugt wird. Daraus ergibt sich unter anderem ein besseres dynamisches Verhalten des modularen Bremsstellers.

Bei einer weiteren vorteilhaften Ausgestaltung der Erfindung sind zumindest ein Teil der Submodule als unipolare Submodule, insbesondere als Halbbrückenmodul oder Doppelhalbbrückenmodul, ausgebildet. Durch die parallele Anordnung der zweiten Reihenschaltung kann auf einfache Weise Energie, die durch den Gleichstrom in die Submodule eingebracht wird, wieder abgegeben werden, ohne dass hierfür eine Umpolung der Spannung an den Submodulen erforderlich ist. Eine derartige Umpolung kann beispielsweise durch bipolare Submodule erreicht werden. Aufgrund der höheren Anzahl von Halbleitern sind die bipolaren Submodule jedoch teurer als die unipolaren Submodule. Durch die zweite Reihenschaltung wird jedoch eine Änderung der Spannungsrichtung an den Submodulen nicht benötigt. Damit können die Submodule als unipolare Submodule, beispielsweise als Halbbrückenmodule oder Doppelhalbbrückenmodule, ausgebildet sein, insbesondere dann, wenn diese Teile der Parallelschaltung mit der zweiten Reihenschaltung aus Kondensator und weiterem Bremswiderstand sind.

Bei einer weiteren vorteilhaften Ausgestaltung der Erfindung ist der Multilevel-Stromrichter wechselspannungsseitig mit einer elektrischen Maschine verbunden, wobei die Steuervorrichtung eingerichtet ist, elektrische Energie aus einem Bremsvorgang der elektrischen Maschine zumindest teilweise durch den modularen Bremssteller in Wärme umzusetzen. Eine elektrische Maschine erzeugt bei einem Bremsvorgang elektrische Energie. Falls der netzseige Stromrichter nicht für die Rückspeisung von elektrischer Energie in das Energieversorgungsnetz ausgelegt ist oder das Netz nicht aufnahmefähig ist, kann mit Hilfe des modularen Bremsstellers die elektrische Energie verschleißfrei in Wärme umgewandelt werden. Dies stellt den sicheren Betrieb der modularen Antriebseinheit, insbesondere unabhängig vom Betriebszustand des Energieversorgungsnetzes, sicher. Darüber hinaus kann die elektrische Maschine hochdynamisch, d.h. mit schnellen Lastwechseln, betrieben werden, da durch den vorgeschlagenen modularen Bremssteller eine hinreichend schnelle Reaktion gewährleistet werden kann.

Bei einer weiteren vorteilhaften Ausgestaltung der Erfindung ist der Multilevel-Stromrichter wechselspannungsseitig mit einem Energieversorgungsnetz verbunden, wobei die Steuervorrichtung eingerichtet ist, insbesondere zur Verbesserung der Stabilität des Energieversorgungsnetz, elektrische Energie in Wärme umzusetzen. Damit eignet sich der Multilevel-Stromrichter insbesondere für Aufgaben der Energieübertragung und -verteilung. Beispielsweise kann ein derartiger Multilevel-Stromrichter dazu genutzt werden, eine entfernt gelegene Energiequelle, beispielsweise ein Offshore-Windpark, mit einem Einspeisepunkt am Festland zu verbinden. Sollte das Energieversorgungsnetz am Einspeisepunkt zeitweise nicht aufnahmefähig sein, so kann mittels des Bremsstellers elektrische Energie in Wärme umgewandelt werden. Damit kann ein Abschalten und ein aufwendiges Wiederanfahren des Windparks beispielsweise in kurzzeitig anstehenden Fehlerfällen, die zu einer beschränken Aufnahmefähigkeit führen, verhindert werden. Dies erhöht die Stabilität sowohl für das Energieversorgungsnetz als auch für den energieerzeugenden Windpark.

Auch bei der Kopplung zweier Energieversorgungsnetze kann der Bremssteller dazu verwendet werden, eine unausgeglichene Leistungsbilanz zwischen den Energieversorgungsnetzen auszugleichen und damit zu einem stabilen Betrieb beider Energieversorgungsnetze beitragen.

Bei einer weiteren vorteilhaften Ausgestaltung der Erfindung ist die Frequenz und/oder die Amplitude der Wechselspannungsanteile abhängig von der Spannung der Submodule. Anhand der Spannung der Submodule, die sich aus der Spannung der Submodulkondensatoren ergibt, kann eine unausgeglichene Energiebilanz erkannt werden. Nehmen die Submodule im Mittel elektrische Energie auf, was durch einen Spannungsanstieg am Kondensator beobachtbar ist, wirkt eine Erhöhung der Amplitude des Wechselspannungsanteils und/oder eine Erhöhung der Frequenz des Wechselspannungsanteils diesem Anstieg entgegen. Beispielsweise kann unter Verwendung eines PI-Reglers die Amplitude und/oder Frequenz des Wechselspannungsanteils in Abhängigkeit von der Submodulspannung vorgegeben bzw. variiert werden.

Bei einer weiteren vorteilhaften Ausgestaltung der Erfindung ist die Amplitude der Wechselspannungsanteile jeweils kleiner ist als ein von den Submodulen einer der Submodulgruppen erzeugter Gleichspannungsanteil. Ist die Amplitude des Wechselspannungsanteils kleiner als die Gleichspannung so werden zur Erzeugung dieser Spannung ausschließlich unipolare Submodule benötigt, da sich die Polarität der Spannung nicht umkehrt. Durch den parallel angeordneten Strompfad der zweiten Reihenschaltung kann für alle Arbeitspunkte eine ausgeglichene Energiebilanz, auch für den Einsatz von unipolaren Submodulen erreicht werden. Wird für den Fall, dass die Amplitude dem Gleichspannungsanteil entspricht, noch mehr Stellreserve benötigt, kann diese über eine Erhöhung der Frequenz erreicht werden. Gerade im Bereich großer Leistungen des Bremsstellers ist aufgrund des geringen Spannungsabfalls an den Submodulen nur eine geringe Leistung über den weiteren Bremswiderstand abzuführen. Dies ist auch über kleine Amplituden, ggf. unterstützt durch eine Erhöhung der Frequenz des Wechselspannungsanteils, möglich.

Im Folgenden wird die Erfindung anhand der in den Figuren angegebenen Ausführungsbeispiele näher beschrieben und erläutert. Es zeigen:

FIG 1, FIG 2       Ausgestaltungen eines modularen Bremsstellers,
FIG 3 bis FIG 6       Ausführungsbeispiele für das Submodul,
FIG 7       Zeitverläufe von Strom und Spannung,
FIG 8 bis FIG 10       Ausführungsbeispiele der modularen Antriebseinheit.

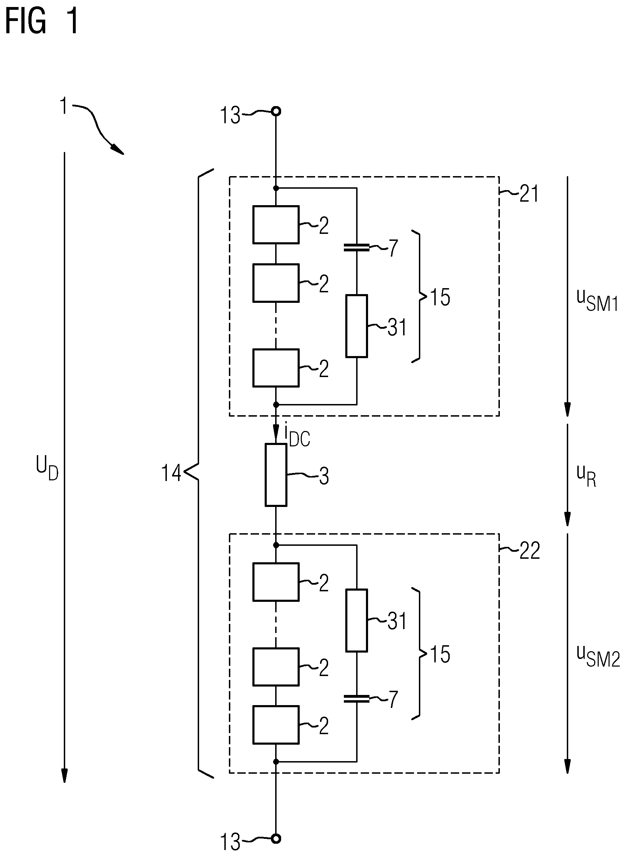

Die FIG 1 zeigt eine Ausgestaltung des modularen Bremsstellers 1. Dieser modulare Bremsstellers 1 weist zwischen seinen zwei Anschlüssen 13 eine erste Reihenschaltung 14 von einer ersten Submodulgruppe 21, einer zweiten Submodulgruppe 22 und einem Bremswiderstand 3 auf, wobei der Bremswiderstand zwischen der ersten Submodulgruppe 21 und der zweiten Submodulgruppe 22, also mittig in dieser ersten Reihenschaltung 14 angeordnet ist. Der modulare Bremssteller 1 ist dazu eingerichtet, an seinen Anschlüssen 13 mit einem Zwischenkreis 9 eines Stromrichters, insbesondere eines modularen Multilevel-Stromrichters 11 verbunden zu werden.

Dabei weisen die Submodulgruppen 21, 22 jeweils mindestens ein Submodul 2 auf. Bei mehr als einem Submodul 2, handelt es sich um eine Vielzahl von Submodulen 2. Mit einer Vielzahl von Submodulen 2 sind mindestens zwei Submodule 2 gemeint. Diese Submodule 2 oder ein Teil dieser Submodule 2 sind, beispielsweise zur Erhöhung der Betriebsspannung des modularen Bremsstellers 1, elektrisch in Reihe angeordnet. Parallel zu dem mindestens einen Submodul 2, zu den elektrisch in Reihe angeordneten Submodulen 2 oder zu einem Teil der elektrisch in Reihe angeordneten Submodulen 2 ist eine zweite Reihenschaltung 15 angeordnet, die einen Kondensator 7 und einen weiteren Bremswiderstand 31 aufweist. Der Kondensator 7 verhindert die Ausbildung eines Gleichstroms durch den weiteren Bremswiderstand 31. Mit Hilfe von über den Submodulen 2 erzeugten Spannungen $u_{SM1}$, $u_{SM2}$ kann eine Spannung über dem Bremswiderstand 3 erzeugt werden. Da die Aufnahme von Wirkleistung durch den modularen Bremssteller 1 über einen Gleichstrom erfolgt, werden über den jeweiligen Submodulgruppen eine Gleichspannung von $u_{SM1} = U_{SM,DC,1}$ und $u_{SM2} = U_{SM,DC,2}$ erzeugt. Damit liegt auch über dem Bremswiderstand eine Gleichspannung von $u_R = U_R$ an, die zu einem Gleichstrom $i_{DC}$ durch den Bremswiderstand 3 führt. Der Spannung $u_{SM1}$, $u_{SM2}$ wird neben dem Gleichanteil von $U_{SM,DC,1}$ und $U_{SM,DC,2}$ noch ein Wechselanteil überlagert. Dieser Wechselanteil bewirkt einen Wechselstrom $i_{R2}$ durch den weiteren Bremswiderstand 31. Somit dient der Gleichstrom $i_{DC}$ der Steuerung oder Regelung der Leistungsaufnahme des modularen Bremsstellers 1 und der Wechselstrom $i_{R2}$ durch die zweite Reihenschaltung 15 um das Energiegleichgewicht innerhalb des modularen Bremsstellers 1 herzustellen, so dass innerhalb der Submodule 2 im zeitlichen Mittel keine Energieaufnahme oder-abgabe erfolgt. Wenn die im zeitlichen Mittel in den Submodulen 2 gespeicherte Energie gleich bleibt, kann der modulare Bremssteller 1 dauerhaft in dem entsprechenden Arbeitspunkt stabil betrieben werden. Die Ausbildung eines Wechselstroms durch den Bremswiderstand 3 wird dadurch vermieden, dass die Wechselspannungsanteile der beiden Submodulgruppen 21, 22 gegenphasig zueinander ausgerichtet sind. Damit fällt über dem Bremswiderstand 3 bei konstanter Zwischenkreisspannung $U_D$ keine Wechselspannung ab, die einen Wechselstrom verursachen könnte. Damit tritt auch nach außen, d.h. an den Anschlüssen 13 des modularen Bremsstellers 1 kein Wechselstrom in Erscheinung. Damit ist der modulare Bremssteller 1 besonders rückwirkungsfrei an einem Stromrichter betreibbar, da keine Oberschwingungen entstehen.

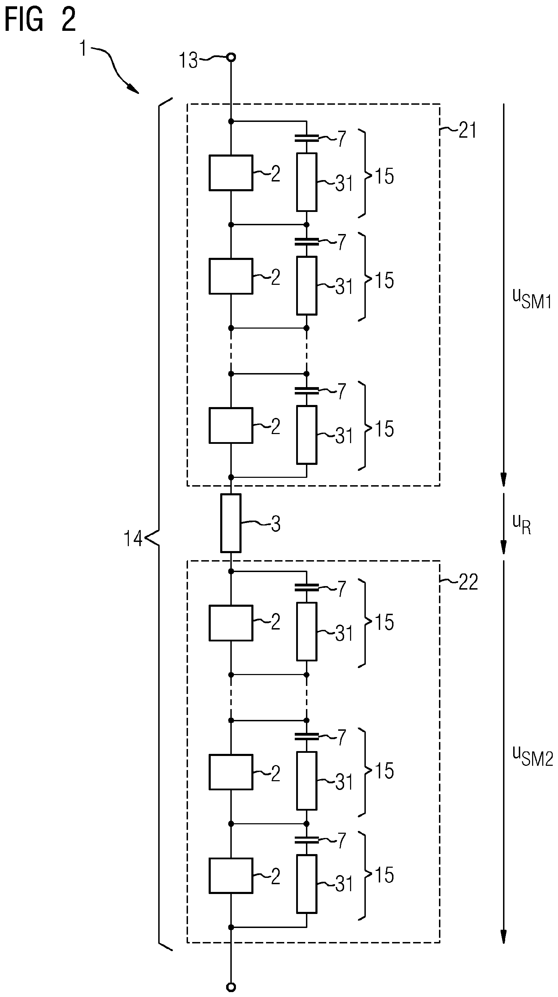

Die FIG 2 zeigt eine alternative Ausgestaltung des modularen Bremsstellers 1. Bei diesem weist jedes Submodul 2 eine parallel angeordnete zweite Reihenschaltung 15 aus Kondensator 7 und weiterem Bremswiderstand 31 auf. Darüber hinaus ist auch jede Kombination der Ausführungsbeispiele nach FIG 1 und FIG 2 möglich, bei dem nur ein Teil der Submodule 2 parallel zu einer zweiten Reihenschaltung 15 angeordnet ist und ein weiterer Teil der Submodule 2 jeweils parallel zu einer weiteren zweiten Reihenschaltung 15 angeordnet ist.

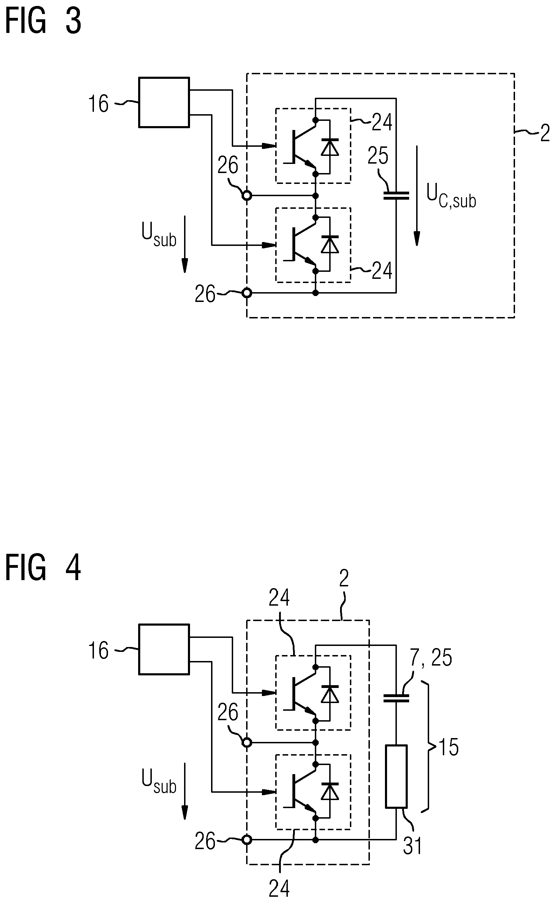

Die Figuren 3 bis 6 zeigen Ausführungsbeispiele von Submodulen 2. Alle bekannten Submodule 2, insbesondere die Submodule 2 der Figuren 3 bis 6 sind für den modularen Bremssteller 1 geeignet. Zur Vermeidung von Wiederholungen wird auf die Beschreibung zu den Figuren 1 und 2 sowie auf die dort eingeführten Bezugszeichen verwiesen.

Die dargestellten Ausführungsbeispiele des Submoduls 2 umfassen mindestens zwei Halbleiterschalter 24. Durch Schalthandlungen der Halbleiterschalter 24 kann eine Ausgangsspannung $U_{sub}$ an den Anschlüssen des Submoduls 2 erzeugt werden. Dabei übermittelt eine Ansteuerbaugruppe 16 die Ansteuersignale an die Halbleiterschalter 24 des Submoduls 2. Die Ansteuerbaugruppe 16 ist vorzugsweise außerhalb des Submoduls 2 angeordnet und somit nicht Teil des Submoduls 2. Alternativ ist es möglich, jedes Submodul 2 mit einer eigenen Ansteuerbaugruppe 16 auszustatten. Jedoch hat es sich als vorteilhaft erwiesen, mit einer Ansteuerbaugruppe 16 alle Submodule 2 des modularen Bremsstellers 1 anzusteuern. Darüber hinaus kann die Ansteuerbaugruppe 16 dann die für die Steuerung und Regelung der Spannungen und Ströme erforderlichen Berechnungen vornehmen. Insbesondere kann die Ansteuerbaugruppe 16 auch Teil einer Steuervorrichtung sein, mit dem die Gleichanteile und Wechselanteile in der Spannung über den Submodulgruppen 21, 22 erzeugt werden.

Die FIG 3 zeigt ein Halbbrückenmodul. Dies weist zwei Halbleiterschalter 24 und einen Submodulkondensator 25 auf. An dem Submodulkondensator 25 liegt die Spannung $U_{C,sub}$ an. Durch Schalthandlungen der Halbleiterschalter 24 kann die Ausgangsspannung $U_{sub}$ von null oder $U_{C,sub}$ an den Anschlüssen des Submoduls 2 erzeugt werden. Eine Ansteuerbaugruppe 16 steuert die Halbleiterschalter 24 dabei so an, dass die gewünschte Spannung zwischen den Submodulanschlüssen 26 anliegt. Da sich die Polarität der Ausgangsspannung nicht ändert, wird ein derartiges Submodul 2 auch als unipolares Submodul bezeichnet.

Die FIG 4 zeigt ein weiteres Ausführungsbeispiel eines Halbbrückenmoduls. Wenn die zweite Reihenschaltung 15 elektrisch parallel nur zu diesem Submodul 2 angeordnet ist, kann auf einen Submodulkondensator 25 verzichtet werden. In diesem Fall kann der Kondensator 7 der zweiten Reihenschaltung 15 die Aufgabe des Energiespeichers im Submodul 2 übernehmen, die sonst durch einen Submodulkondensator 25 erfüllt wird. Eine derartige Erweiterung ist auch für die nachfolgend beschriebenen Submodule 2 möglich, indem der Submodulkondensator 25 durch die zweite Reihenschaltung 15 aus Kondensator 7 und weiterer Bremswiderstand 31 ersetzt wird.

Eine Ansteuerbaugruppe 16 steuert die Halbleiterschalter 24 dabei so an, dass die gewünschte Spannung zwischen den Submodulanschlüssen 26 anliegt. Da sich die Polarität der Ausgangsspannung auch in diesem Ausführungsbeispiel nicht ändert, wird ein derartiges Submodul 2 auch als unipolares Submodul bezeichnet.

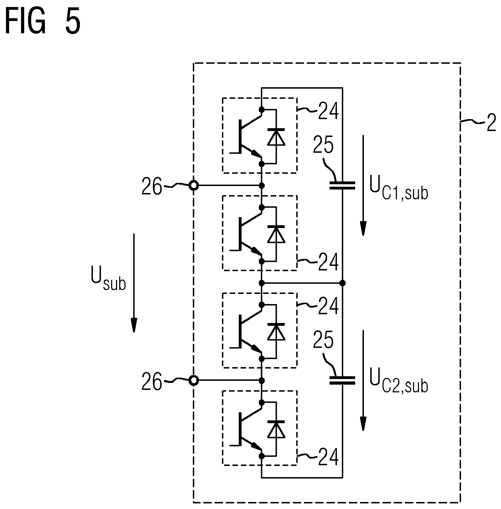

Die FIG 5 zeigt ein sogenanntes Doppelhalbbrückenmodul. Dieses Doppelhalbbrückenmodul weist vier Halbleiterschalter 24 und zwei Submodulkondensatoren 25 auf. An den Submodulkondensatoren 25 liegt jeweils die Spannung $U_{C1,sub}$ bzw. $U_{C2,sub}$ an. Durch Schalthandlungen der Halbleiterschalter kann die Ausgangsspannung $U_{sub}$ von null, von einer der Kondensatorspannungen $U_{C1,sub}$, $U_{C2,sub}$ oder von der Summe der Kondensatorspannungen $U_{C1,sub}$, $U_{C2,sub}$ an den Submodulanschlüssen 26 des Submoduls 2 erzeugt werden. Eine hier nicht dargestellte Ansteuerbaugruppe 16 kann die Halbleiterschalter 24 dabei so ansteuern, dass die gewünschte Spannung zwischen den Submodulanschlüssen 26 anliegt. Auch dieses Submodul 2 ist ein unipolares Submodul.

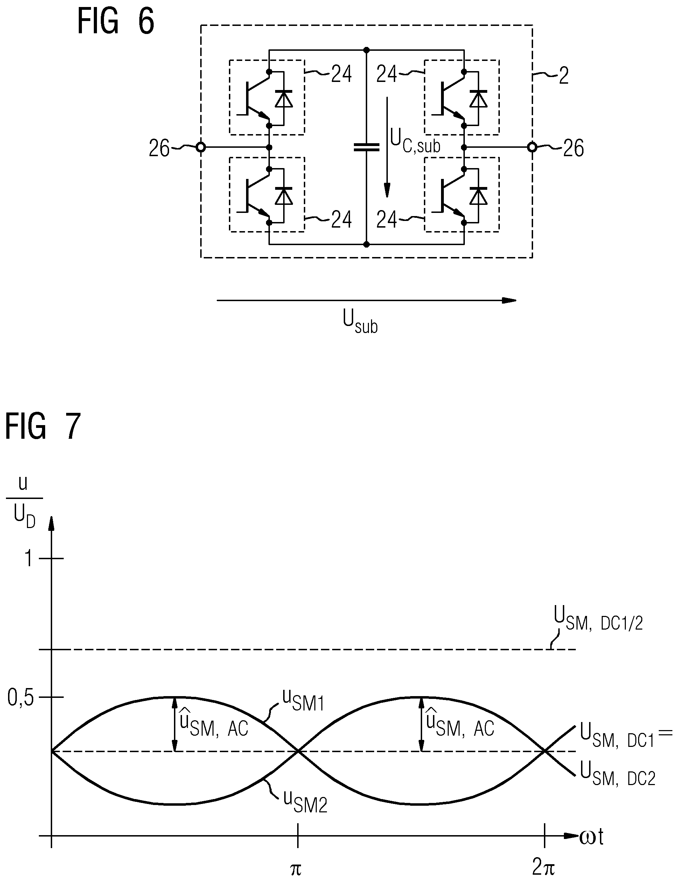

Die FIG 6 zeigt ein sogenanntes Vollbrückenmodul. Dieses Vollbrückenmodul weist vier Halbleiterschalter und einen Submodulkondensator 25 auf. An dem Submodulkondensator 25 liegt die Spannung $U_{C,sub}$ an. Durch Schalthandlungen der Halbleiterschalter 24 kann die Ausgangsspannung $U_{sub}$ von null, der positiven oder der negativen Kondensatorspannung $\pm U_{C,sub}$ des Submodulkondensators an den Submodulanschlüssen 26 des Submoduls 2 erzeugt werden. Eine hier nicht dargestellte Ansteuerbaugruppe 16 kann die Halbleiterschalter 24 dabei so ansteuern, dass die gewünschte Spannung zwischen den Submodulanschlüssen 26 anliegt. Da sich mit diesem Submodul 2 Spannungen unterschiedlicher Polarität erzeugen lassen, wird diese Art von Submodul 2 auch als bipolares Submodul bezeichnet.

Die FIG 7 zeigt den Zeitverlauf der auf die Zwischenkreisspannung $U_D$ bezogenen Spannungen u, die durch die Submodulgruppen 21, 22 erzeugt werden. Dabei erzeugen die beiden Submodulgruppen 21, 22 zusammen die Spannung $U_{SM,DC,1/2}$, die sich auf die jeweiligen Submodulgruppen 21, 22 vorzugsweise gleich aufteilen, so dass jede der Submodulgruppen 21, 22 jeweils einen Gleichanteil von

$$U_{SM,DC,1} = U_{SM,DC,2} = \frac{1}{2}U_{SM,DC,1/2}$$

aufweisen. Beiden Gleichspannungsanteilen ist ein Wechselspannungsanteil überlagert, wobei die Wechselspannungsanteile gegenphasig, d.h. mit einer Phasenverschiebung von 180°, zueinander ausgerichtet sind, so dass diese keinen Spannungsabfall über dem Bremswiderstand 3 erzeugen. Diese Wechselanteile können einen beliebigen Zeitverlauf, wie beispielsweise einen sinusförmigen, rechteckförmigen, dreieckförmigen, trapezförmigen usw., annehmen. Dargestellt ist der FIG 7 ein sinusförmiger Zeitverlauf mit einer jeweiligen Amplitude von $\hat{u}_{SM,AC}$.

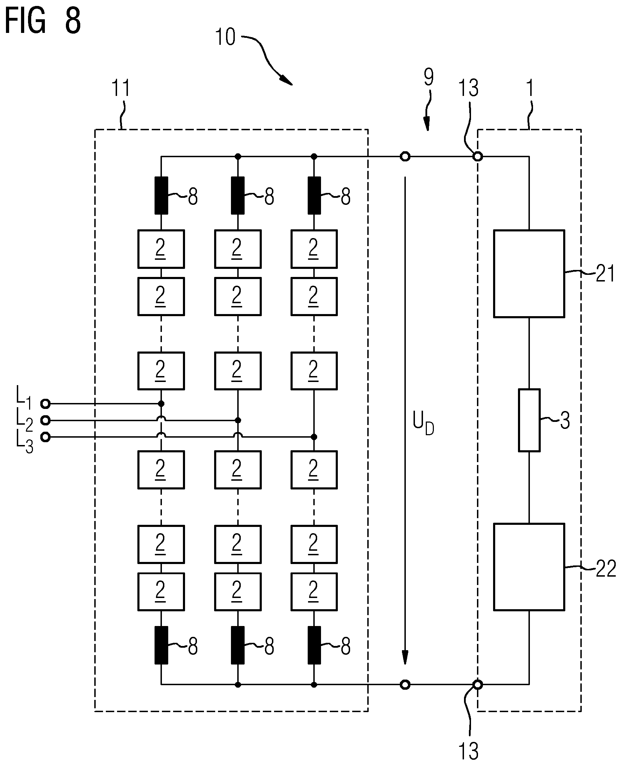

Die FIG 8 zeigt eine modulare Antriebseinheit 10 mit einem modularen Multilevel-Stromrichter 11 und einem modularen Bremssteller 1. Diese sind über den Zwischenkreis 9, an dem die Zwischenkreisspannung $U_D$ anliegt, miteinander verbunden. Mit anderen Worten ist der modulare Multilevel-Stromrichter 11 gleichspannungsseitig mit den Anschlüssen 13 des modularen Bremssteller 1 verbunden. Zur Vermeidung von Wiederholungen wird auf die Beschreibung zu den Figuren 1 bis 6 sowie auf die dort eingeführten Bezugszeichen verwiesen. Der modulare Bremssteller 1 weist die erste Reihenschaltung 14 von erster Submodulgruppe 21, zweiter Submodulgruppe 22 und Bremswiderstand 3 auf. Die Submodulgruppen 21, 22 weisen jeweils mindestens ein Submodul 2 sowie die zweite Reihenschaltung 15 aus Kondensator 7 und weiteren Bremswiderstand 31 auf, die aus Gründen der Übersichtlichkeit nicht explizit dargestellt sind. Diesbezüglich wird auf die Ausgestaltungen der Figuren 1 und 2 verwiesen. Dabei kann, nicht notwendigerweise, der modulare Multilevel-Stromrichter 11 die gleichen Submodule 2 aufweisen wie die Submodulgruppen 21, 22 des modularen Bremsstellers 1. Die Reihenschaltung der Submodule des modularen Multilevel-Stromrichters 11 weist darüber hinaus noch vorzugsweise eine Induktivität 8 auf, die das Regelverhalten des modularen Multilevel-Stromrichters 11 verbessert. Die Anschlüsse L1, L2, L3 stellen die wechselspannungsseitigen Anschlüsse oder kurz die Wechselspannungsseite des modularen Multilevel-Stromrichters 11 dar. In diesem Ausführungsbeispiel ist der modulare Multilevel-Stromrichter 11 dreiphasig ausgeführt. Alternativ ist auch eine einphasige Ausführung mit Neutralleiter oder auch jede beliebige Phasenanzahl möglich, indem entsprechend viele Phasenmodule im modularen Multilevel-Stromrichter 11 angeordnet werden.

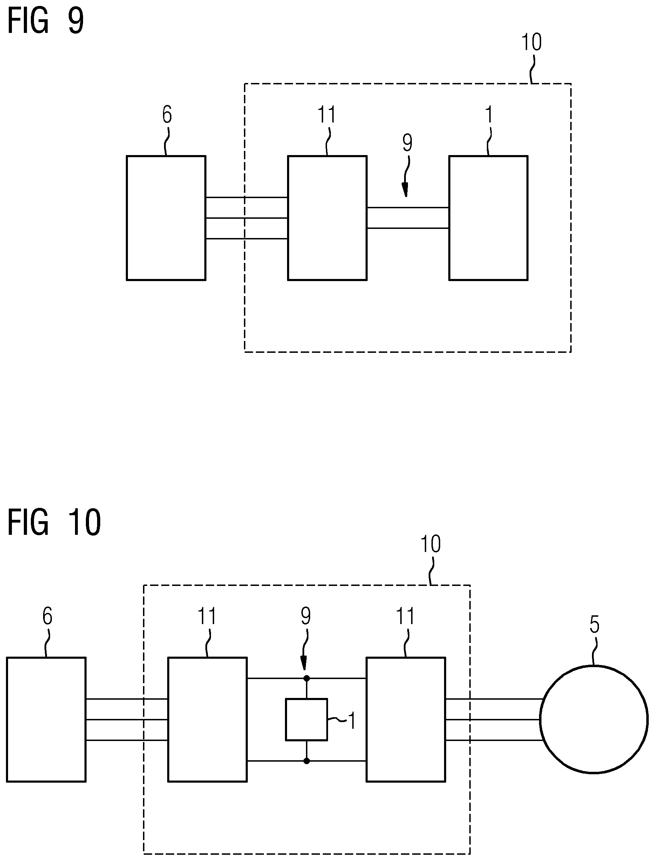

In der FIG 9 ist ein weiteres Ausführungsbeispiel der modularen Antriebseinheit 10 dargestellt. Dabei ist der modulare Multilevel-Stromrichters 11 wechselspannungsseitig mit einem Energieversorgungsnetz 6 verbunden. Alternativ kann er mit einer beliebigen Energiequelle oder Energiespeicher verbunden sein.

Im Ausführungsbeispiel der FIG 10 weist die modulare Antriebseinheit 10 zwei modulare Multilevel-Stromrichter 11 und einen modularen Bremssteller 1 auf, die am Zwischenkreis 9 miteinander elektrisch verbunden sind. Dabei ist ein erster der zwei modularen Multilevel-Stromrichter 11 an seiner Wechselspannungsseite mit einer elektrischen Maschine 5 verbunden. Ein zweiter der zwei modularen Multilevel-Stromrichter 11, also ein weiterer modularer Multilevel-Stromrichter 11, ist an seiner Wechselspannungsseite mit einem Energieversorgungsnetz 6 verbunden. Die elektrische Maschine 5 kann dabei aus dem Energieversorgungsnetz 6 mit elektrischer Energie versorgt, d.h. gespeist, werden. Auch eine Rückspeisung von Energie von der elektrischen Maschine 5 in das Energieversorgungsnetz 6, beispielsweise bei einem Bremsvorgang, ist mit der modularen Antriebseinheit 10 möglich. Falls das Energieversorgungsnetz 6, vorübergehend oder dauerhaft, nicht aufnahmefähig ist, kann die durch die elektrische Maschine 5 gewonnene elektrische Energie mittels des modularen Bremsstellers 1 in vorteilhafter Weise verschleißfrei in Wärme umgewandelt werden. Auf eine verschleißbehaftete mechanische Bremse kann in dieser Ausgestaltung verzichtet werden.

Bezugszeichenliste

| 1 | Modularer Bremssteller |
|---|---|
| 2 | Submodul |
| 3 | Bremswiderstand |
| 5 | elektrische Maschine |
| 6 | Energieversorgungsnetz |
| 7 | Kondensator |
| 8 | Induktivität |
| 9 | Zwischenkreis |
| 10 | Modulare Antriebseinheit |
| 11 | Multilevel-Stromrichter |
| 13 | Anschlüsse des Bremsstellers (1) |
| 14 | erste Reihenschaltung |
| 15 | zweite Reihenschaltung |
| 16 | Ansteuerbaugruppe |
| 21 | erste Submodulgruppe |
| 22 | zweite Submodulgruppe |
| 24 | Halbleiterschalter |
| 25 | Submodulkondensator |
| 26 | Submodulanschlüsse |
| 31 | weiterer Bremswiderstand |

**Patentansprüche**

1. Modularer Bremssteller (1), wobei zwischen zwei Anschlüssen (13) des modularen Bremsstellers (1) eine erste Submodulgruppe (21), eine zweite Submodulgruppe (22) und ein Bremswiderstand (3) in einer ersten Reihenschaltung (14) angeordnet sind, wobei der Bremswiderstand (3) elektrisch zwischen der ersten Submodulgruppe (21) und der zweiten Submodulgruppe (22) angeordnet ist, wobei die erste Submodulgruppe (21) und die zweite Submodulgruppe (22) jeweils mindestens ein Submodul (2), einen weiteren Bremswiderstand (31) und einen Kondensator (7) aufweisen, wobei elektrisch parallel zu mindestens einem Submodul (2) des mindestens einen Submoduls (2) eine zweiten Reihenschaltung (15) aus dem weiteren Bremswiderstand (31) und dem Kondensator (7) angeordnet ist.

2. Modularer Bremssteller (1) nach Anspruch 1, wobei die erste Submodulgruppe (21) und die zweite Submodulgruppe (22) jeweils eine Vielzahl von Submodulen (2) aufweisen, wobei die Submodule (2) elektrisch in Reihe angeordnet sind.

3. Modularer Bremssteller (1) nach Anspruch 2, wobei die zweite Reihenschaltung (15) elektrisch parallel zu einem Teil der Submodule (2) der jeweiligen Submodulgruppe (21,22) angeordnet ist.

4. Modularer Bremssteller (1) nach Anspruch 2, wobei die zweite Reihenschaltung (15) elektrisch parallel zu allen Submodulen (2) der jeweiligen Submodulgruppe (21,22) angeordnet ist.

5. Modularer Bremssteller (1) nach einem der Ansprüche 2 bis 4, wobei die Submodulgruppen (21,22) jeweils eine Vielzahl von zweiten Reihenschaltungen (15) aufweisen, wobei die zweiten Reihenschaltungen (15) jeweils parallel zu mindestens einem der Submodule (2) angeordnet sind.

6. Modularer Bremssteller (1) nach Anspruch 5, wobei jedes Submodul (2) parallel zu einer der zweiten Reihenschaltungen (12) angeordnet ist.

7. Modularer Bremssteller (1) nach einem der Ansprüche 1 bis 6, wobei mindestens ein Submodul (2) der jeweiligen Submodulgruppen (21,22) als Vollbrückenmodul ausgebildet ist.

8. Modularer Bremssteller (1) nach einem der Ansprüche 2 bis 7, wobei zumindest ein Teil der Submodule (2) als unipolare Submodule, insbesondere als Halbbrückenmodul oder Doppelhalbbrückenmodul, ausgebildet sind.

9. Modulare Antriebseinheit (10), aufweisend einen modularen Multilevel-Stromrichter (11) und einen modularen Bremssteller (1) nach einem der Ansprüche 1 bis 8, wobei der Multilevel-Stromrichter (11) gleichspannungsseitig mit dem modularen Bremssteller (1) verbunden ist.

10. Modulare Antriebseinheit (10) nach Anspruch 9, wobei der Multilevel-Stromrichter (11) wechselspannungsseitig mit einer elektrischen Maschine (5) verbunden ist, wobei die Steuervorrichtung (4) eingerichtet ist, elektrische Energie aus einem Bremsvorgang der elektrischen Maschine (5) zumindest teilweise durch den modularen Bremssteller (1) in Wärme umzusetzen.

11. Modulare Antriebseinheit (10) nach einem der Ansprüche 9 oder 10, wobei der Multilevel-Stromrichter (11) oder ein weiterer Multilevel-Stromrichter wechselspannungsseitig mit einem Energieversorgungsnetz (6) verbunden ist, wobei die Steuervorrichtung (4) eingerichtet ist, insbesondere zur Verbesserung der Stabilität des Energieversorgungsnetz (6), elektrische Energie in Wärme umzusetzen.

12. Betriebsverfahren für einen modularen Bremssteller (1) nach einem der Ansprüche 1 bis 8 oder für eine modulare Antriebseinheit (10) nach einem der Ansprüche 9 bis 11, wobei durch die Submodule (2) der ersten Submodulgruppe (21) ein erster Wechselspannungsanteil ($u_{BR,AC,1}$) und durch die Submodule (2) der zweiten Submodulgruppe (22) ein zweiter Wechselspannungsanteil ($u_{BR,AC,2}$) erzeugt wird, wobei der erste Wechselspannungsanteil ($u_{BR,AC,1}$) und der zweiter Wechselspannungsanteil ($u_{BR,AC,2}$) gegenphasig zueinander sind.

13. Betriebsverfahren nach Anspruch 12, wobei die Frequenz (f) und/oder die Amplitude (û) der Wechselspannungsanteile ($u_{BR,AC,1}$, $u_{BR,AC,2}$) abhängig von der Spannung der Submodule (2) ist.

14. Betriebsverfahren nach einem der Ansprüche 12 oder 13, wobei die Amplitude (û) der Wechselspannungsanteile

($u_{BR,AC,1}$, $u_{BR,AC,2}$) jeweils kleiner ist als ein von den Submodulen (2) einer der Submodulgruppen (21,22) erzeugter Gleichspannungsanteil ($u_{BR,DC,1}$, $u_{BR,DC,2}$).

FIG 1

# FIG 2

## FIG 3

## FIG 4

FIG 5

# FIG 6

# FIG 7

## FIG 8

FIG 9

FIG 10

Europäisches Patentamt
European Patent Office
Office européen des brevets

# EUROPÄISCHER RECHERCHENBERICHT

Nummer der Anmeldung

EP 24 15 8898

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HOFMANN VIKTOR ET AL: "Design and Modulation Optimization of an MMC Based Braking Chopper", 2022 24TH EUROPEAN CONFERENCE ON POWER ELECTRONICS AND APPLICATIONS (EPE'22 ECCE EUROPE), EPE ASSOCIATION, 5. September 2022 (2022-09-05), Seiten 1-11, XP034208108, [gefunden am 2022-10-17] * Seite 1 - Seite 2; Abbildungen 1(b), 2(b) * | 1-14 | INV. H02M7/483 H02M1/32 H02M1/34 H02P3/22 |
| A | CN 115 483 824 A (HITACHI ENERGY SWITZERLAND AG) 16. Dezember 2022 (2022-12-16) * Absatz [0059] - Absatz [0061]; Abbildung 3 * | 1-14 | |
| A | CHEN LVYANG ET AL: "A Novel Mixture-Devices-Based Submodule for MMC by Using Low on-State Voltage IGCT and High di/dt Ability IGBT", IEEE TRANSACTIONS ON INDUSTRIAL ELECTRONICS, IEEE SERVICE CENTER, PISCATAWAY, NJ, USA, Bd. 71, Nr. 3, 1. Mai 2023 (2023-05-01), Seiten 2375-2384, XP011949788, ISSN: 0278-0046, DOI: 10.1109/TIE.2023.3270542 [gefunden am 2023-05-01] * Abbildung 1(b) * | 6 | |

- - - - -

- - - - -

- - - - -

-/--

| | RECHERCHIERTE SACHGEBIETE (IPC) |
|---|---|
| | H02M H02H H02P |

Der vorliegende Recherchenbericht wurde für alle Patentansprüche erstellt

| Recherchenort | Abschlußdatum der Recherche | Prüfer |
|---|---|---|
| Den Haag | 19. Juli 2024 | Zeljkovic, Sandra |

EPO FORM 1503 03.82 (P04C03)

Seite 1 von 2

| | Europäisches Patentamt |
|---|---|
| | European Patent Office |
| | Office européen des brevets |

# EUROPÄISCHER RECHERCHENBERICHT

**Nummer der Anmeldung**

EP 24 15 8898

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LADOUX PHILIPPE ET AL: "On the Potential of IGCTs in HVDC", IEEE JOURNAL OF EMERGING AND SELECTED TOPICS IN POWER ELECTRONICS, IEEE, PISCATAWAY, NJ, USA, Bd. 3, Nr. 3, 1. September 2015 (2015-09-01), Seiten 780-793, XP011664598, ISSN: 2168-6777, DOI: 10.1109/JESTPE.2015.2429116 [gefunden am 2015-07-30] * Abbildung 2 * ----- | 6 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 19. Juli 2024 | Zeljkovic, Sandra |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 8898

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2024

| Im Recherchenbericht angeführtes Patentdokument | Datum der Veröffentlichung | Mitglied(er) der Patentfamilie | Datum der Veröffentlichung |
|---|---|---|---|
| CN 115483824 A | 16-12-2022 | CN 115483824 A | 16-12-2022 |
| | | EP 4106168 A1 | 21-12-2022 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1

- WO 2007023061 A2